# EUROPEAN PATENT SPECIFICATION

(11) **EP 0 600 995 B1**
(45) Date of publication and mention of the grant of the patent: **03.04.1996**
(21) Application number: 92918025.5
(22) Date of filing: 25.08.1992
(51) Int. Cl.: A01G 29/00

(54) **AN AIR-PERMEABLE PLATE FOR PLANT CULTIVATION AND A METHOD FOR CULTIVATION OF PLANTS UTILIZING THE SAME**
LUFTDURCHLÄSSIGE PLATTE FÜR DIE KULTUR VON PFLANZEN UND KULTURVERFAHREN FÜR PFLANZEN MIT VERWENDUNG EINER SOLCHEN PLATTE
PANNEAU PERMEABLE A L'AIR POUR LA CULTURE DE PLANTES ET PROCEDE DE CULTURE DE PLANTES QUI UTILISE UN TEL PANNEAU

(30) Priority: 26.08.1991 JP 295252/91
(43) Date of publication of application: 15.06.1994
(73) Proprietor: NIHON TENSAISEITO KABUSHIKI KAISHA, Chuo-ku Tokyo 104 (JP)
(72) Inventor: MASUDA, Akiyoshi, Obihiro-shi, Hokkaido 080 (JP); TANIMURA, Masashi, Obihiro-shi, Hokkaido 080 (JP)
(74) Representative: Nikolajsen, Rudolf
(86) International application number: JP9201068
(87) International publication number: WO9303606

(56) References cited:
- EP-A- 0 316 777
- DE-A- 2 346 268
- FR-A- 2 358 098
- US-A- 3 866 352

## Description

### Technical Field

The present invention relates to an air-permeable plate which is buried in a location near the roots of plants being cultivated in a horizontal medium containing no ridges in which vegetables, flowering plants, flowering trees, etc. are cultivated, but which in essence creates the same effect as a furrow between two ridges of a plot, and a method for cultivation of plants utilizing the same.

### Background Art

According to the prior art, the cultivation of vegetables, flowering plants, etc. in farmland includes tilling the farmland to an adequate depth, making ridges after fertilization which are separated by a determined space, and planting seeds or transplanting seedlings. When making such ridges, it is considered preferable for them to be lower in cases where the plants to be cultivated are highly resistant to moisture, and to be higher in cases where the plants are not very resistant to moisture. This is because, in the case of higher ridges, the aeration of the medium is better, due to a broader contact of both sides of the ridges with the atmosphere, whereby a more favorable growth of plants is possible. Also, regarding the raising of flowering plants, flowering trees, etc. in plant pots, etc. where aeration is required, application is made utilizing sphagnum moss, etc. in the medium.

However, for high ridge cultivation, much labor is required to fill in the crests to a fixed height for each prescribed ridge width to prepare the high ridges after tilling and fertilization. Also, high ridge cultivation has a drawback in that high ridges gradually crumble during the cultivation period due to rainfall, irrigation, etc., and the soil loses its softness and becomes hard. There has been proposed a method to improve aeration whereby a furrow is dug about 100 mm wide and 300 mm deep in the middle of the ridges, to create a contact surface with the atmosphere in the soil, thereby providing high ridges in effect. However, there is severe evaporation of moisture from the furrow, and in the case of cultivation in plant pots, special mediums utilizing sphagnum moss, etc. are costly and difficult to manage.

### Disclosure of the Invention

In light of the above circumstances, a variety of research has been done by us the inventors of the present invention concerning a plant cultivation method which has the same aeration effect as an actual high ridge, without raising the soil into a crest to create a high ridge, and concerning a plant cultivation method which has the same aeration effect in a medium for plant pots. As a result, it has been found that, if decay-resistant and air-permeable medium paper stock is formed into a corrugated shape and glued to a likewise decay-resistant, air-permeable liner, using a water-resistant adhesive agent to make a corrugated plate, with the corrugated portion and the liner comprising a channel as an aeration region to allow contact with the atmosphere, and said decay-resistant corrugated plate (hereafter referred to as "air-permeable plate") is then buried at a proper length in a furrow wide enough to allow insertion of the plate which is placed in a location near the roots of the plants, adequate contact with the atmosphere is maintained without collapsing of the air-permeable plate in the middle of the ridge, and preservation of an extremely favorable air-permeability is observed even when cultivating in low ridges over a long period of time,. Also, it has been found that with plant pots, etc., due to air-permeable plates which have been cut into tanzakus (strips of folded paper) and buried in a medium inside an appropriate pot, preservation of an extremely favorable air-permeability is observed. Thus the present invention has been completed.

That is, we the inventors of the present invention applied copper 8-oxyquinoline as a decay-resistant agent on the entire surface of the paper at a per weight concentration of 3%, and corrugated with 50 layers per 30 cm of medium paper stock (80 g/m²) with a decay-resistant width of 250 mm. Then, an air-permeable plate was obtained which was glued, using a vinyl acetate resin as a waterproof adhesive, to a liner (100 g/m²) with a width of 250 mm on which copper 8-oxyquinoline decay-resistant agent was applied on the entire surface in the same manner at a per weight concentration of 3%, and the plate was cut into successive lengths of 1.5 m. Meanwhile, after making small furrows of 10 mm width and 200 mm depth spaced 40 cm apart in a 15 m x 8 m plot, the above mentioned air-permeable plates were buried in each small furrow thereby forming 20 ridges with the air-permeable plates inserted therebetween, and lettuce seedlings which had been raised for 20 days were transplanted 40 cm apart in each ridge.

For comparison, plots were prepared with furrows made in high ridges and low ridges, and the same lettuce seedlings were transplanted. Twenty high ridges were made with a width of 60 cm, a height of 20 cm, and an interval between the roots of the seedlings of 40 cm. Twenty furrows 100 mm wide, 300 mm deep and 50 cm apart were made in the low ridges, also with an interval between the roots of 40 cm.

The results of cultivation from transplanting to harvesting, as well as the variation in the ridges through time are shown in Table 1.

**Table 1**

| | Ground surface weight 14 days after transplantation (g/10 heads) | Days for harvesting (days) | Weight at the time of harvesting (kg/10 heads) | Condition of ridge after transplantation | | |
|---|---|---|---|---|---|---|
| | | | | 20 days | 40 days | At a harvesting |
| Utilizing air permeable Plates | 472 | 57 | 3.75 | No change | No change | No change |
| High ridge comparison | 468 | 64 | 3.15 | Side collapsed section | 50% of sides are collapsed | 90% of sides are collapsed |
| Flat ridge comparison | 466 | 64 | 2.60 | 50% of furrows are buried | 90% of furrows are buried | 100% of furrows are buried |

As Table 1 makes clear, since air-permeable plates are buried under the soil in the medium as partitions of the ridges, the part of the soil that is within the depth of the air-permeable plates can be assured of contact with the atmosphere. Therefore, aeration was accomplished in the same manner as in the case of high ridges, and there was no collapsing of the air-permeable plates, obviously during the initial growing period after transplanting, and even from the intermediate period to the final period, the same air-permeability which existed at first was continuously maintained, and harvesting was made 7 days earlier. On the other hand, in the high ridges there was no substantial change during the initial growing period, but during the intermediate and final periods both sides collapsed and the air-permeability of the soil decreased. In the comparison medium in which simple furrows had been made, the furrows began collapsing in the initial growing period, became almost completely filled by the intermediate period, and by the final growing period there was absolutely no furrow effect at all. By burying air-permeable plates in the medium in a perpendicular direction, it is possible to create a condition between the air-permeable plates similar to that of high ridges, and maintain such a condition for a long period of time.

In addition, a number of tanzaku-like air-permeable plates of dimensions of 250 mm x 25 mm were made by cutting the corrugated air-permeable plates made in the above mentioned manner in a direction parallel to the corrugations of the medium paper stock, to lengths of 25 mm. Then, prior to planting an ornamental plant compactor with soil in a plant pot of diameter 210 mm and depth 210 mm, five pieces of these tanzaku-like air-permeable plates were randomly buried inside the medium, leaving one part of the long side of each one exposed from the medium. On the other hand, for comparison, observation was made of the cultivation conditions when planting a compactor in a plant pot of the same dimensions and with the same type of soil. At the end of one month, in the pot utilizing the air-permeable plates, no collapsing of the air-permeable plates was observed, and growth was favorable, and the number of stems was 3 times that of the comparison pot, and leaf color was excellent. Also, when 200 cc irrigation was done, practically all excess moisture was eliminated after 5 minutes in the pot utilizing the air-permeable plates, while there was an excess moisture condition for about half a day in the comparison pot.

Since the air-permeable plates according to the present invention are buried in a perpendicular direction and are spaced according to a determined length in the cultivation bed of a plot or vinyl plastic hothouse, etc., the width corresponds to the burying depth, but normally a 10-300 mm width is used, usually from around 100 - 200 mm. Also, for the length, depending on the usage, it may be coiled, or a prescribed perforation may be made in a 200 - 2000 mm square or rectangular shape to be cut at the time of use. It is also possible to make satisfactory use of not one but multiple layer corrugations for the air-permeable plates, but since the transpiration of moisture becomes severe when the width of the multiple layers is too great, 1 - 3 layers, and normally only one layer is used according to the present invention. Also, the shape of the channel section which meets with the atmosphere is not limited to a straight line, as it may be curved or a combination of straight lines. When burying it in the ground, it is important only that the channel space which meets the atmosphere is supported. A decay-resistant agent to be applied to or mixed with the liner and medium paper stock in constructing the air-permeable plates according to the present invention may be any one which does not decompose the liner and medium paper stock used during the cultivation period. However, normally copper 8-oxyquiniline, benzimidazole or chlorotalonile, etc. used for the paper to be constructed into paper tube assembly for the seedling transplantation, and which does not obstruct the lengthening of the plant roots, is utilized. Also, paper extracted from natural fibers, such as that disclosed in Japanese Patent Application Disclosure No. SHO 9-100793, may be used satisfactorily after immersion in aqueous solution of an ethylene urea derivative containing a methylol group such as urea dimethylolethylene, etc., followed by heat treatment.

As the waterproof adhesive agent used to glue the medium paper stock to the liner, any agent may be used which is water resistant enough not to wash away due to irrigation, rainfall, etc. during the cultivation period. For example, a waterproof adhesive agent such as a vinyl acetate resin may be mixed with a water-soluble adhesive agent such as a polyvinyl alcohol in order to improve water resistance. The air-permeable plates used in a plant pot, etc. normally have one-layer of corrugations, and the width is adapted to match the depth of the pot being used, but usually a depth of about 100 - 250 mm is used, with a length of about 15 - 30 mm.

The air-permeable plates according to the present invention may be buried close to the plant roots as long as their lengthening is not obstructed, and may be normally buried at a location 100 - 200 mm from the center of the plants, but depending on the size of the plants being cultivated, the width may sometimes be further increased. It may be more economical and efficient to bury the air-permeable plates in the plot in an area near the plants, intermittently rather than continuously. Moreover, burying is normally done in a perpendicular direction, but depending on the specific characteristics of the plants, a burying method which slants in an outward direction or inward direction, or which wraps the roots in an L-shape or U-shape is also effective.

According to the present invention, decay-resistant medium paper stock was glued to a decay-resistant liner using a waterproof adhesive agent to make a corrugated air-permeable plate, thereby rendering the structure of each corrugation extremely strong against pressure from the outside surface. This structure proved useful in preventing collapsing and crushing of the plate buried in the soil, while the multiple corrugations, having a contact surface with the atmosphere, provided aeration in the interior of the soil. Also, elimination of excess moisture from the plant pots, etc. was also achieved. The present invention is explained more fully with reference to the following examples.

### Example 1 Production of the air-permeable plates

Benzimidazole was applied as a decay-resistant agent to the entire surface of 1125 mm wide, 100 g/m² kraft liner paper stock, to a concentration of 5% per weight of the paper, and the paper was coiled. Two such reels were prepared. On the other hand, benzimidazole was also applied in the same manner to the entire surface of medium paper stock of a semi-chemical pulp, having a width of 1125 mm and a basis weight of 100 g/m², to a concentration of 5% per weight of the paper, and the paper was coiled. Next, these liner and medium paper stock were put through a corrugating machine, the medium paper stock which was successively drawn out was formed into corrugated layers of 34 layers per 300 mm using a multistage roll, and a waterproof adhesive agent POVAL 117 TM was applied to the outer surface. At the same time, the liners which were successively drawn out from the liner reel were pressed with a press roll against the side of the layered medium paper stock to which the adhesive agent was applied, and one-sided corrugated cardboard was thus constructed. Further, the same waterproof adhesive agent Pobaru 117 mentioned above was applied to the corrugated surface of the one-sided corrugated cardboard, and a liner from a separate reel was successively drawn and adhered to the side on which the adhesive agent was applied. While continuing this process, it was sent through a dryer and cooler to make double-sided corrugated cardboard, and this was cut into successive lengths of 1800 mm. Next, a perforated line was made every 225 mm along the width to make 5 air-permeable plates of width 225 mm from one sheet of 1125 x 1800 mm square decay-resistant corrugated cardboard.

### Example 2 Cultivation of cabbage using ridges in which air-permeable plates were buried.

The air-permeable plates made in Example 1 which were connected with perforated lines made along the 1125 mm width, were separated along the perforated lines into each air-permeable plate of width 225 mm and length 1800 mm. After making small furrows 10 mm wide and 200 mm deep spaced 40 cm apart in an 18 m long plot which had been already tilled, the air-permeable plates were buried in the small furrows. This resulted in 10 sheets being buried per row. Next, cabbage seedlings were transplanted 45 cm apart in 4 ridges created between the air-permeable plates. These took root satisfactorily, and produced adequate growth upon harvesting after 80 days. The air-permeable plates at the time of harvesting, as at the time of burying, showed no crushing of their corrugations, and had an adequate number of openings. The average weight per one head of the yield was 1250 g.

On the other hand, 4 ridges 60 cm wide and 20 cm high were made in the same plot for comparison, and the same cabbage seedlings were transplanted 45 cm apart. The high ridges began to collapse after about 30 days, and the growth was approximately 7 days later than in the medium utilizing the air-permeable plates, while the average weight per one head of the yield was as small as 1100 g.

### Example 3 Cultivation of carrots using ridges in which air-permeable plates were buried.

The air-permeable plates of width 225 mm and length 1800 mm which were made in Example 1 were buried in small furrows which were made to a width of 10 mm and a depth of 200 mm and spaced 45 cm apart, in a 10.8 m long plot which had been already tilled. This resulted in 6 sheets being buried per row. Next, carrot seedlings which had been grown for 28 days were transplanted 12 cm apart in 5 ridges created between the air-permeable plates. Growth was satisfactory, and harvesting was done 120 days after transplanting. Despite a long cultivation period, there was no collapsing of the air-permeable plates, and they remained adequately buried. Also, the average weight per one carrot was 170 g.

On the other hand, 6 furrows of width 100 mm and depth 200 mm were made every 45 cm in the same plot for comparison, and the same carrot seedlings as mentioned above in the 5 ridges between the air-permeable plates were transplanted 12 cm apart. The furrows were in a half-collapsed condition 30 days after transplantation, and dryness resulted due to evaporation of moisture through the walls of the furrows. Growth was late, and the average weight per one carrot at the same time of harvesting as the medium which utilized the air-permeable plates was 140 g.

### Example 4 Cultivation of Chinese cabbage using ridges in which air-permeable plates were buried intermittently.

The air-permeable plates of width 225 mm and length 1800 mm which were made in Example 1 were each cut further into 9 pieces of length 200 mm, and buried intermittently 30 cm apart in 2 small furrows which were made to a width of 10 mm and a depth of 200 mm and spaced 55 cm apart, in a 9 m long plot which had been already tilled. This resulted in 18 sheets of 225 mm x 200 mm air-permeable plates being buried per row, which with 2 rows per ridge amounted to 36 sheets per ridge. Next, Chinese cabbage seedlings which had been grown for 30 days were transplanted 50 cm apart between the air-permeable plates of the two rows of each ridge. Growth was favorable, and harvesting was done 60 days after transplanting. The average weight per head of Chinese cabbage of the yield was 2290 g. Also, there was no collapsing of the air-permeable plates, and their condition remained as buried in the initial period.

On the other hand, normal flat ridges were constructed in the same plot, and the same Chinese cabbage seedlings as mentioned above were transplanted 50 cm apart between the ridges with a space of 75 cm, for comparison. Growth seemed late compared to the medium which utilized the air-permeable plates, and the average weight per one head at the same time of harvesting of the medium which utilized the air-permeable plates was 1847 g.

### Example 5 Growth of ornamental plants using plant pots in which air-permeable plates were buried.

The air-permeable plates of width 225 mm which were made in Example 1 were cut into lengths of 20 mm, and were used as tanzaku-like air-permeable plates of width 225 mm and length 20 mm. Using a rectangular spade, 6 of these pieces were inserted and buried into a pot medium around caladium ornamental plants, which had already been planted in the medium which was composed mainly of dry volcanic ash in each of 5 plant pots of diameter 180 mm and depth 190 mm.

On the other hand, 5 identical pots with the same plants were prepared for comparison, and their growth was observed. When the degree of growth was inspected after 45 days, the number of stems in the medium which utilized tanzaku-like air-permeable plates was 50% greater than that of the comparison medium, plant height was 18% greater, and the leaf color was deep.

### Example 6

Kraft liner paper stock of width 1100 mm and basis weight 80 g/m² and medium paper stock of the same dimension and basis weight as the above made from natural pulp of basis weight and recycled paper pulp were immersed for 2 minutes in an aqueous solution containing 10(W/V)% dimethylol ethylene urea and 2(W/V)% magnesium chloride, and then drained using a 2-layer compression roller, after which they were treated with heat in a 150°C oven for 3 minutes. Next, the thus treated liner and medium paper stock were put through a corrugating machine, the medium paper stock which was successively drawn out was formed into corrugations of 40 layers per 400 mm using a multistage roll, and a waterproof adhesive agent MOWINYL 084E TM was applied to the outer surface. At the same time, the liner which was successively drawn out from the liner reel was pressed with a press roll against the side of the layered medium paper stock to which the adhesive agent was applied, and one-sided corrugated cardboard was thus constructed. This was then cut into successive lengths of 300 mm, and a perforated line was made along the width every 220 mm, to make 5 air-permeable plates of width 220 mm from one sheet of 1100 x 300 mm square decay-resistant corrugated cardboard.

After making small furrows of width 10 mm and depth 200 mm spaced 40 cm apart in an 18 m long plot, these 300 mm x 220 mm air-permeable plates were buried in the small furrows leaving a space of 150 mm between them. This resulted in 40 sheets being buried per row. Next, lettuce seedlings were transplanted 45 cm apart in the 4 ridges made between the air-permeable plates, so as to come to the center of the 300 mm width of the buried air-permeable plates. These took root satisfactorily, and produced adequate growth upon harvesting after 60 days. As at the time of burying, there was no crushing of the corrugations of the air-permeable plates at the time of harvest, and the gaps were adequately maintained. The average weight per head of the yield was 507 g. On the other hand, four high ridges of width 60 cm and height 20 cm were made in the same plot, and the same lettuce seedlings as mentioned above were transplanted 45 cm apart, for comparison. The high ridges began to collapse about 30 days later, and growth was approximately 5 days later than that of the medium which utilized the air-permeable plates, while the average weight per head of lettuce was as small as 420 g.

### EFFECTS

According to the present invention, a decay-resistant liner is glued to decay-resistant medium paper stock using a waterproof adhesive agent, to make corrugated cardboard air-permeable plates, and the aeration channels created by the corrugations are capable of resisting the tendency to collapse under the pressure of the furrows which utilize the air-permeable plates during the cultivation period, thus making aeration of the soil possible from the initial cultivation period to the final cultivation period, due to the corrugations which are in contact with the atmosphere. Also, aeration of the soil is possible for ridges of shorter width in the same manner as for high ridges without forming additional crests, while the plant roots are aerated, and the cultivation efficiency per cultivatable area of a plot, plastic hothouse, etc. is greatly improved. Further, for plant pots, the roots are aerated due to burying of tanzaku-like air-permeable plates in the pot medium, while excess moisture is eliminated and optimum moisture conditions are maintained in the medium, producing a healthy growth of the plants.

## Claims

1. An air-permeable plate for plant cultivation made from a decay-resistant board which is glued using a waterproof adhesive agent to a flat board which is prepared with mixing of a decay-resistant agent or to which a decay-resistant agent is applied, which comprise multiple channels being formed by corrugation and having contact with the atmosphere above the ground surface while being buried in the soil to form air spaces to allow contact of the inner soil with said atmosphere.

2. An air-permeable plate acording to Claim 1 , where the channels are formed between two of the boards.

3. A method for cultivation of plants characterized by providing oxygen to the cultivated plants by burying in a roughly perpendicular direction air-permeable plates possessing channels which are formed between two air-permeable boards treated with a decay-resistant agent and glued by using a waterproof adhesive agent, in an area of the medium near the roots of the cultivated plants, while maintaining contact of the channels with the atmosphere above the ground surface.

4. A method for cultivation of plants according to Claim 4 characterized by burying a number of the air-permeable plates in a row of a plot, and making a number of such parallel rows, with the area between the air-permeable plates of each row as the plant growing ridges.

5. A method for cultivation of plants according to Claim 4, where the medium is the soil of a plant pot.

## Patentansprüche

1. Luftdurchlässige Platte zur Kultivierung von Pflanzen, hergestellt aus einem verrottungsbeständigen Brett, das unter Verwendung eines wasserfesten Klebstoffes mit einem flachen Brett verleimt ist, das unter Beimischung eines verrottungsbeständigen Wirkstoffes hergestellt ist oder auf das ein verrottungsbeständiger Wirkstoff aufgetragen ist, welche mehrere Kanäle umfaßt, die durch Wellen gebildet sind und Kontakt mit der Atmosphäre oberhalb der Erdoberfläche haben, während sie in der Erde vergraben sind, um Lufträume zu bilden, um den Kontakt der innenliegenden Erde mit der Atmosphäre zu erlauben.

2. Luftdurchlässige Platte nach Anspruch 1, bei welcher die Kanäle zwischen zwei Brettern gebildet sind.

3. Verfahren zur Kultivierung von Pflanzen, gekennzeichnet durch das Versorgen der kultivierten Pflanzen mit Sauerstoff, indem in einer etwa senkrechten Richtung luftdurchlässige Platten, die Kanäle aufweisen, die zwischen zwei luftdurchlässigen Brettern ausgebildet sind, die mit einem verrottungsbeständigen Wirkstoff behandelt und unter Verwendung eines wasserfesten Klebstoffes verleimt sind, vergraben werden, und zwar in einem Bereich des Mediums nahe den Wurzeln der kultivierten Pflanzen, während der Kontakt der Kanäle mit der Atmosphäre oberhalb der Erdoberfläche aufrechterhalten wird.

4. Verfahren zur Kultivierung von Pflanzen nach Anspruch 4, gekennzeichnet durch das Vergraben einer Anzahl der luftdurchlässigen Platten in einer Reihe eines Beetes und Herstellen einer Anzahl derartiger paralleler Reihen, wobei der Bereich zwischen den luftdurchlässigen Platten jeder Reihe die Pflanzenzuchtreihe ist.

5. Verfahren zur Kultivierung von Pflanzen nach Anspruch 4, wobei das Medium die Erde eines Pflanztopfes ist.

## Revendications

1. Panneau perméable à l'air pour la culture de plantes, fabriqué à partir d'une planche résistant à la pourriture qui est collée en utilisant un adhésif étanche à l'eau sur une planche plate qui est préparée par mélange d'un agent résistant à la pourriture ou sur laquelle un agent résistant à la pourriture est appliqué, qui comprend de multiples canaux formés par gaufrage et en contact avec l'atmosphère régnant au-dessus de la surface du sol, tout en étant enterré dans la terre pour former des poches d'air permettant le contact de l'intérieur de la terre avec l'atmosphère.

2. Panneau perméable à l'air selon la revendication 1, dans lequel les canaux sont formés entre deux des planches.

3. Procédé de culture de plantes, caractérisé par le fait de fournir de l'oxygène aux plantes cultivées en enterrant, dans une direction approximativement perpendiculaire, des panneaux perméables à l'air possédant des canaux qui sont formés entre deux planches perméables à l'air traitées avec un agent résistant à la pourriture et collées en utilisant un adhésif étanche à l'eau, dans une zone du milieu proche des racines des plantes cultivées, tout en maintenant le contact entre les canaux et l'atmosphère régnant au-dessus de la surface du sol.

4. Procédé de culture de plantes selon la revendication 3, caractérisé par le fait d'enterrer un certain nombre de panneaux perméables à l'air dans une rangée d'un terrain, et de former un certain nombre de rangées parallèles, l'espace existant entre les panneaux perméables à l'air de chaque rangée servant de crête pour la croissance des plantes.

5. Procédé de culture de plantes selon la revendication 3, dans lequel le milieu est la terre d'un pot à plantes.
